Europäisches Patentamt

European Patent Office

Office européen des brevets

(19)

(11) Veröffentlichungsnummer: **0 195 968**
**A1**

(12) **EUROPÄISCHE PATENTANMELDUNG**

(21) Anmeldenummer: **86102992.4**

(22) Anmeldetag: **06.03.86**

(51) Int. Cl.⁴: **C 08 G 63/54**, C 08 L 67/06
// (C08L67/06, 67:06)

(30) Priorität: **08.03.85 DE 3508207**

(43) Veröffentlichungstag der Anmeldung: **01.10.86**
**Patentblatt 86/40**

(84) Benannte Vertragsstaaten: **DE FR GB IT NL**

(71) Anmelder: **BASF Aktiengesellschaft,**
**Carl-Bosch-Strasse 38, D-6700 Ludwigshafen (DE)**

(72) Erfinder: **Demmler, Kurt, Dr., Irisstrasse 8,**
**D-6700 Ludwigshafen (DE)**
Erfinder: **Scholz, Dankmar, Heidelberger Ring 31,**
**D-6710 Frankenthal (DE)**

(54) **Härtbare Polyester-Harzmassen.**

(57) Härtbare Harzmassen auf Basis eines oder mehrerer ungesättigter Polyester, die kettenständige trans-1,2-Alkendicarbonsäuregruppen und endständige 1,2-Alkendicarbonsäuregruppen enthalten, wobei die letzteren weitgehend zu Monodicyclopentenylestergruppen umgesetzt sind. Die Harzmassen dienen zur Herstellung von elastischen und wasserfesten Füll-, Dichtungs- und Beschichtungsmassen.

EP 0 195 968 A1

## Härtbare Polyester-Harzmassen

Die Erfindung betrifft härtbare Harzmassen auf Basis eines oder mehrerer ungesättigter Polyester, die sowohl kettenständige trans-1,2-Alkendicarbonsäuregruppen als auch endständige 1,2-Alkendicarbonsäuregruppen enthalten.

Aus der EP-B-31 977 ist ein ungesättigter Polyester mit einer Säurezahl zwischen 5 und 60 bekannt, der eine endständige 1,2-Alkendicarbonsäuree in einer Menge von 1 bis 25 Mol% enthält, und bei dem die Dicarbonsäuregruppen in der Kette aus 1 bis 8 Mol% einer trans-1,2-Alkendicarbonsäure bestehen. Beim Aushärten von Harzmassen, die solche ungesättigten Polyester enthalten, ergeben sich Formkörper, die sich durch besondere Elastizität auszeichnen.

Es hat sich nun gezeigt, daß derartige Harzmassen eine geringe Lagerstabilität auch bei verhältnismäßig niedrigen Temperaturen aufweisen. Styrolische Lösungen der Polyester gelieren bereits nach wenigen Stunden Lagerung bei $80^{\circ}$C. Außerdem zeigen ausgehärtete Formkörper aus derartigen Harzmassen eine verhältnismäßig hohe Wasseraufnahme und eine geringe Hydrolysenbeständigkeit.

Ziel der Erfindung war es nun, härtbare Harzmassen bereitzustellen, welche die genannten Nachteile nicht oder in nur stark verringertem Maß aufweisen.

Es wurde gefunden, daß diese Aufgabe gelöst wird, wenn bei härtbaren Harzmassen auf Basis eines oder mehrerer ungesättigter Polyester mit 0,5 bis 10 Mol% kettenständigen trans-1,2-Alkendicarbonsäuregruppen und 1 bis 25 Mol% endständiger 1,2-Alkendicarbonsäuregruppen die endständigen Säuregruppen weitgehend zu Monodicyclopentenylestergruppen umgesetzt sind.

In die ungesättigten Polyester nach der EP-B-31 977 können zwar auch Dicyclopentadienyl-Einheiten eingebaut werden. Folgt man aber dem Beispiel 19, wo ein solcher Polyester beschrieben ist, so zeigt sich, daß unter den Veresterungsbedingungen das Dicyclopentadien sich in zwei Mole Cyclopentadien spaltet und dieses sich an die Doppelbindung der Fumarsäure unter Bildung von Endomethylentetrahydrophthalsäure addiert, die in die Kette eingebaut wird. Endständige, Monodicyclopentenylgruppen enthaltende veresterte 1,2-Alkendicarbonsäuregruppen sind also nicht offenbart.

Dd/P

Die erfindungsgemäßen Harzmassen können entweder einen einzigen ungesättigten Polyester enthalten, der beide 1,2-Alkendicarbonsäurefunktionen
in einem Molekül aufweist, oder zwei verschiedene ungesättigte Polyester,
die jeweils eine der beiden 1,2-Alkendicarbonsäurefunktionen enthalten.

Dementsprechend werden die beiden Arten von Harzmassen auch nach verschiedenartigen Verfahren hergestellt. Die eine Herstellungsweise ist
ausführlich in der EP-B-31 977 beschrieben. Die Dicyclopentenyl-Endgruppe
kann dabei nach verschiedenen Methoden eingeführt werden: Man kann die
1,2-Alkendicarbonsäureendgruppen, die bevorzugt Maleinsäurehalbestergruppen sind, bei Temperaturen zwischen 120 und 150°C mit Dicyclopentadien umsetzen, wobei sich die Carboxylgruppe an eine der beiden Doppelbindungen des Dicyclopentadiens addiert unter Bildung der Dicyclopentenylester-Endgruppe. Vorzugsweise bildet man jedoch erst den Maleinsäuremonodicyclopentenylester durch Umsetzen von Maleinsäure bzw. Maleinsäureanhydrid + Wasser mit Dicyclopentadien oder Dicyclopentenol bei Temperaturen zwischen 120 und 150°C, den man dann in der 2. Stufe mit dem Diol
bzw. Diolgemischen, den gesättigten Dicarbonsäuren und der 1,2-Alkendicarbonsäure bzw. ihrem Anhydrid weiter verestert. Es ist auch möglich, in
einer Eintopfreaktion alle Komponenten, nämlich Diol, gesättigte Dicarbonsäure und Alkendicarbonsäure und den cis-Alkendicarbonsäure-Dicyclo-
pentenyl-Halbester gemeinsam der Polyveresterung zu unterwerfen. Dabei
kann außer trans-1,2-Alkendicarbonsäure auch cis-1,2-Alkendicarbonsäure
bzw. deren Anhydrid eingesetzt werden, die sich unter den Veresterungsbedingungen weitgehend in die trans-Form umlagern (isomerisieren).

Zur Herstellung der bevorzugten Polyestermischung werden die beiden ungesättigten Polyester getrennt polykondensiert. Der eine Polyester wird
hergestellt durch übliche Veresterung einer Diolkomponente mit einer Dicarbonsäurekomponente. Die Diolkomponente kann in untergeordneten Mengen
auch Triole und Monoalkohole enthalten. Bevorzugtes Diol is Neopentylglykol, daneben sind auch Propylenglykol-1,2, Ethylenglykol, Diethylenglykol, Butandiol-1,2, Butandiol-1,4 und hydriertes Bisphenol A geeignet.
Die Dicarbonsäurekomponente besteht aus einem Gemisch aus einer Alkandicarbonsäure und einer 1,2-Alkendicarbonsäure, wobei letztere in einer
solchen Menge eingesetzt wird, daß die Mischung der beiden Polyester 0,5
bis 10, vorzugsweise 1 bis 5 Mol% kettenständige trans-1,2-Alkendicarbonsäuregruppen aufweist. Vorzugsweise wird ein Gemisch von Adipinsäure und
Fumarsäure eingesetzt. Statt oder neben Adipinsäure können auch o-Phthalsäure, Trimellithsäure und Pyromellithsäure bzw. deren Anhydride verwendet werden. Als 1,2-Alkendicarbonsäure-Komponente kann grundsätzlich auch
Maleinsäure bzw. deren Anhydrid eingesetzt werden.

Der andere Polyester wird ebenfalls auf bekannte Weise aus einer Diolkomponente und einer Dicarbonsäurekomponente hergestellt, wobei letztere in diesem Fall neben der Alkandicarbonsäure einen Halbester aus einer cis-Alkendicarbonsäure und Dicyclopentenol enthält, vorzugsweise das Umsetzungsprodukt von Maleinsäure und Dicyclopentadien, welches bei Temperaturen zwischen 120 und 150°C hergestellt wurde.

Zur Herstellung der erfindungsgemäßen Harzmassen werden die Polyester auf übliche Weise in copolymerisierbaren Vinyl-Monomeren, vorzugsweise Styrol, gelöst und mit üblichen Zusatzstoffen, wie Füllstoffen, Verstärkungsfasern, Inhibitoren, Stabilisatoren, Farbstoffen, Pigmenten, Eindickmitteln und Beschleunigern versetzt.

Diese Harzmassen zeichnen sich durch ihre gute Lagerstabilität, die (z.B. bei 80°C) mehrere Tage beträgt, aus. Diese ist wahrscheinlich darauf zurückzuführen, daß die 1,2-Alkendicarbonsäureendgruppen durch Addition an Dicyclopentadien weitgehend verestert sind. Weitgehend bedeutet, daß mindestens 50 %, vorzugsweise mehr als 80 % und insbesondere mehr als 90 % dieser Endgruppen verestert sind.

Die Harzmassen können als Füll-, Beschichtungs- und Dichtungsmassen verwendet werden. Besonders geeignet sind sie zur Herstellung von elastischen und wasserfesten Flachdachbeschichtungen. Sie werden zu diesen Anwendungszwecken mit üblichen Peroxid- oder Lichtinitiatoren versetzt. Die Härtung erfolgt auf übliche Weise durch Temperaturerhöhung oder Bestrah-lung mit geeigneten Lichtquellen.

<u>Beispiel 1</u>

a) 98 Gew.-Teile Maleinsäureanhydrid, 18 Gew.-Teile Wasser und 132 Gew.-Teile Dicyclopentadien werden unter Darüberleiten von Stickstoff und Rühren langsam auf 125°C aufgeheizt sowie 2 h bei 125°C und 2 h bei 145°C gehalten.

100 Gew.-Teile obigen Umsetzungsproduktes, 584 Gew.-Teile Adipinsäure und 447 Gew.-Teile Neopentylglykol werden unter Darüberleiten von Stickstoff und Rühren innerhalb 2 h auf 200°C aufgeheizt und 16 h dabei gehalten. Erhalten wird ein klares, gelblich gefärbtes Harz mit einer Säurezahl um 15 und einer Hydroxylzahl um 10. 900 Gew.-Teile dieses ungesättigten Polyesters werden nach Zugabe von 0,161 Gew.-Teilen Hydrochinon mit 707 Gew.-Teilen Styrol gelöst (Viskosität (23°C) 154 mPas, Lagerstabilität (80°C) 40-64 h).

b) 116 Gew.-Teile Fumarsäure, 438 Gew.-Teile Adipinsäure und 416 Gew.-Teile Neopentylglykol werden unter Darüberleiten von Stickstoff und Rühren langsam auf 200°C aufgeheizt und 20 h dabei gehalten. Erhalten wird ein gelbliches, klares, zähflüssiges Harz mit einer Säurezahl um 10.

750 g dieses ungesättigten Polyesters werden nach Zugabe von 0,134 Gew.-Teilen Hydrochinon mit 589 Gew.-Teilen Styrol gelöst (Viskosität (23°C) 571 mPas).

c) 35 Gew.-Teile Fumarsäure, 730 Gew.-Teile Adipinsäure, 572 Gew.-Teile Neopentylglykol und 100 Gew.-Teile Mono-Dicyclopentenylmaleat werden unter Darüberleiten von Stickstoff und Rühren innerhalb von 2 h auf 200°C erhitzt und 22 h dabei gehalten. Erhalten wird ein gelbes, klares, zähes Harz mit einer Säurezahl von 13 und einer Hydroxylzahl von 11.

1200 Gew.-Teile dieses Polyesters werden nach Zugabe von 0,214 Gew.-Teilen Hydrochinon mit 943 Gew.-Teilen Styrol gelöst (Viskosität (23°C) 162 mPas, Lagerstabilität (80°C) 48 h).

Beispiel 2

80 Gew.-Teile der Harzlösung aus Beispiel 1a) und 20 Gew.-Teile der Harzlösung aus Beispiel 1b) werden gemischt und mit 3,5 Gew.-Teilen Benzoylperoxidpaste (50%ig) sowie 0,5 Gew.-Teile Dimethylanilin in einer 1 mm dicken Schicht bei RT gehärtet und 4 h bei 100°C nachgehärtet. Erhalten wird eine elastische Platte mit einem Tg dyn bei -20°C und +35°C und einem G'(-20°C) von 900 N/mm² bzw. (+100°C) von 0,8 N/mm². Sie läßt sich selbst bei -20°C biegen, ohne zu brechen.

Beispiel 3

100 Gew.-Teile der Harzlösung aus Beispiel 1c) werden mit 3,5 Gew.-Teilen Benzoylperoxidpaste (50%ig) sowie 0,5 Gew.-Teilen Dimethylanilin in einer 1 mm dicken Schicht bei Raumtemperatur gehärtet und nach 1 d 4 h bei 100°C nachgehärtet. Erhalten wird eine elastische Platte mit einem Tg dyn bei -10°C und +35°C und einem G'(-20°C) von 1000 N/mm² bzw. (+100°C) von > 0,5 N/mm².

Beispiel 4 (Vergleich)

1752 Gew.-Teile Adipinsäure und 1342 Gew.-Teile Neopentylglykol werden in einem Glaskolben mit beheiztem Rückflußkühler und Übergang unter Darüberleiten eines Stickstoffstroms 17 h bei 200°C verestert bis zu einer Säurezahl von 12. Nach Abkühlen auf 135°C werden 108 Gew.-Teile Maleinsäureanhydrid zugesetzt und 3 h bei 135°C gehalten. Erhalten werden 2715 Gew.-Teile eines gelblichen, klaren, zähflüssigen Polyesters (Säurezahl 34, Hydroxylzahl 12). 2650 Gew.-Teile dieses Polyesters werden nach Zugabe von 0,379 Gew.-Teilen Hydrochinon mit 1136 Gew.-Teilen Styrol gelöst (Viskosität (23°C) 646 mPas, Lagerstabilität (80°C) 4 h).

Beispiel 5 (Vergleichsbsp. in Anlehnung an Beispiel 19 von EP-B-31 977)

107 Gew.-Teile Fumarsäure, 450 Gew.-Teile Adipinsäure, 441 Gew.-Teile Neopentylglykol und 53 Gew.-Teile Dicyclopentadien werden in einem Vierhalskolben mit ölbeheiztem Rückflußkühler und Übergang unter Rühren und Darüberleiten von Stickstoff innerhalb 3 h auf 200°C aufgeheizt. Nach 4 h 200°C wurde der ölbeheizte Rückflußkühler entfernt. Nach insgesamt 15 h 200°C und 7 h 205°C war die Säurezahl auf 9,6 gesunken. Nach Abkühlen auf 150°C wurden 558 Gew.-Teile dieses Polyesters und 16 Gew.-Teile Maleinsäureanhydrid unter Stickstoff 2 h bei 150°C gehalten und nach Zugabe von 0,038 Gew.-Teilen Hydrochinon mit 383 Gew.-Teilen Styrol gelöst. Die klare Lösung hatte eine Säurezahl von 19,2, eine Hydroxylzahl von 13,1 mit einer Lagerstabilität (80°C) 5 h.

## Patentansprüche

1. Härtbare Harzmassen auf Basis eines oder mehrerer ungesättigter Polyester, die 0,5 bis 10 Mol% kettenständiger trans-1,2-Alkendicarbonsäuregruppen und 1 bis 25 Mol% endständiger 1,2-Alkendicarbonsäuregruppen, jeweils bezogen auf die Gesamtmenge an Dicarbonsäuren, enthalten, dadurch gekennzeichnet, daß die endständigen 1,2-Alkendicarbonsäuregruppen weitgehend zu Monodicyclopentenylestergruppen umgesetzt sind.

2. Härtbare Harzmassen nach Anspruch 1, dadurch gekennzeichnet, daß sie aus einem ungesättigten Polyester bestehen, der beide 1,2-Alkendicarbonsäurefunktionen in einem Molekül enthält.

3. Härtbare Harzmassen nach Anspruch 1, dadurch gekennzeichnet, daß sie aus einer Mischung von zwei ungesättigten Polyestern bestehen, wobei der eine die kettenständigen trans-1,2-Alkendicarbonsäuregruppen und der andere die zu Monodicyclopentenylestergruppen umgesetzten endständigen 1,2-Alkendicarbonsäuregruppen enthält.

4. Verfahren zur Herstellung von elastischen Dichtungs-, Füll- oder Überzugsmassen durch Aushärten der Harzmassen nach Anspruch 1.

# 0195968

Nummer der Anmeldung

**EUROPÄISCHER RECHERCHENBERICHT**

EP 86 10 2992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 031 977 (UNILEVER LTD.) <br> * Patentansprüche 1-8; Seite 4, Zeilen 6-8 * | 1,2,4 | C 08 G 63/54 <br> C 08 L 67/06 // <br> (C 08 L 67/06 <br> C 08 L 67:06 ) |
| Y | DE-A-1 770 643 (CHEMISCHE WERKE ALBERT) <br> * Patentansprüche; Seite 3, Zeilen 6-8 * | 1,2,4 | |
| A | GB-A-2 073 214 (USS ENGINEERS AND CONSULTANTS INC.) <br> * Patentansprüche 1-8; Seite 1, Zeilen 5-7 * | 1,2,4 | |
| A | EP-A-0 097 909 (KANEGAFUCHI KAGAKU KOGYO KK) <br> * Patentansprüche 1-10 * | 1,3 | RECHERCHIERTE SACHGEBIETE (Int. Cl.4) <br><br> C 08 G <br> C 08 L |

Der vorliegende Recherchenbericht wurde für alle Patentansprüche erstellt.

| Recherchenort <br> DEN HAAG | Abschlußdatum der Recherche <br> 18-06-1986 | Prüfer <br> DECOCKER L. |
|---|---|---|